# EUROPÄISCHE PATENTSCHRIFT

(11) **EP 1 996 983 B1**
(45) Veröffentlichungstag und Bekanntmachung des Hinweises auf die Patenterteilung: **01.06.2011**
(21) Anmeldenummer: 07723245.2
(22) Anmeldetag: 14.03.2007
(51) Int. Cl.: H04L 12/423

(54) **VERFAHREN UND STEUER- UND DATENÜBERTRAGUNGSANLAGE ZUM ÜBERPRÜFEN DES EINBAUORTES EINES SICHEREN KOMMUNIKATIONSTEILNEHMERS**
METHOD AND CONTROL AND DATA TRANSMISSION SYSTEM FOR VERIFYING THE INSTALLATION LOCATION OF A SECURE COMMUNICATIONS COMPONENT
PROCÉDÉ ET SYSTÈME DE TRANSMISSION DE DONNÉES ET DE COMMANDE PERMETTANT DE VÉRIFIER L'EMPLACEMENT D'INSTALLATION D'UN ABONNÉ À UN SYSTÈME DE COMMUNICATION SÉCURISÉ

(30) Priorität: 22.03.2006 DE 102006013578
(43) Veröffentlichungstag der Anmeldung: 03.12.2008
(73) Patentinhaber: Phoenix Contact GmbH & Co. KG, 32825 Blomberg (DE)
(72) Erfinder: OSTER, Viktor, 32825 Blomberg (DE); SCHMIDT, Joachim, 31812 Bad Pyrmont (DE); HORN, Steffen, 32825 Blomberg (DE)
(74) Vertreter: Kampfenkel, Klaus
(86) Internationale Anmeldenummer: PCT/EP2007/002235
(87) Internationale Veröffentlichungsnummer: WO 2007/107271

(56) Entgegenhaltungen:
- EP-B1- 1 206 868
- DE-A1- 3 838 152
- DE-C1- 19 934 514

## Beschreibung

Die Erfindung betrifft ein Verfahren zum Überprüfen des Einbauortes wenigstens eines sicheren, an eine Steuer- und Datenübertragungsanlage angeschalteten Kommunikatiönsteilnehmers sowie eine Steuer- und Datenübertragungsanlage, die insbesondere zur Durchführung dieses Verfahrens geeignet ist.

Steuer- und Datenübertragungsanlagen nehmen heute aufgrund des damit möglichen hohen Automatisierungsgrades eine herausragende Stellung in der industriellen Fertigung und Anlagensteuerung ein. Sehr verbreitet ist die Verwendung eines Kommunikationssystems, über das eine Vielzahl dezentraler Ein- und Ausgabeeinheiten mit einer zentralen Steuerungseinrichtung verbunden werden.

Zur Einhaltung von Sicherheitsstandards bei der Durchführung sicherheitskritischer Prozesse werden in der Automatisierungstechnik vorwiegend Kommunikationssysteme eingesetzt, die beispielsweise einen CAN-Bus, Profibus oder INTERBUS in Verbindung mit sicherheitsgerichteten Buskomponenten enthalten. Bei sicherheitsgerichteten Prozessen werden zum Beispiel Schutzgitter und Schutztüren überwacht sowie Zweihand-Schalter und Not-Aus-Schalter angesteuert. Die an ein solches Kommunikationssystem angeschlossenen Buskomponenten werden im Folgenden auch als Teilnehmer oder Busteilnehmer bezeichnet. Sicherheitsgerichtete Buskomponenten werden auch als sichere Busteilnehmer bezeichnet, die zusammen mit nicht sicheren Busteilnehmern an einem solchen Kommunikationssystem angeschlossen werden können.

Es ist bekannt, einem sicheren Busteilnehmer zur Erhöhung der Sicherheit eine individuelle Teilnehmeradresse zuzuordnen, welche beispielsweise direkt am Busteilnehmer eingestellt werden kann.

Aus EP 1 206 868 B1 ist ferner ein Verfahren zum Konfigurieren eines sicheren Busteilnehmers sowie ein Steuerungssystem bekannt, welches einen solchen Busteilnehmer aufweist. Bei dem in EP 1 206 868 B1 beschriebenen Verfahren ist eine Verwaltungseinheit für die Vergabe von Teilnehmeradressen vorgesehen, welche an den Bus angeschlossen ist. Für die Verwaltungseinheit ist ein spezieller Wartungsmodus vorgesehen, in welchem Wartungstelegramme über den Bus versandt werden. Bei Empfang eines solchen Wartungstelegramms wird von einem sicheren Busteilnehmer ein Anmeldetelegramm an die Verwaltungseinheit gesandt, welches eine festgelegte Universaladresse umfasst. Empfängt die Verwaltungseinheit wiederum ein solches Anmeldetelegramm mit einer enthaltenen Universaladresse, sendet sie ein Adressvergabetelegramm mit einer definierten Teilnehmeradresse an den sicheren Busteilnehmer zurück, wo diese gespeichert wird.

Aus DE 199 34 514 C1 ist ein Verfahren zum Konfigurieren eines an einen Feldbus angeschlossenen sicheren Busteilnehmers bekannt, welches das Übermitteln einer logischen und einer physikalischen Adresse an den sicheren Busteilnehmer von einer Adressvergabeeinheit vorsieht. Die übermittelte physikalische Adresse wird anhand einer tatsächlichen physikalischen Position des sicheren Busteilnehmers verifiziert und die logische Adresse in Abhängigkeit von der Verifikation in einem Speicher des Busteilnehmers gespeichert.

Aus der DE 10 2005 019970 A1 ist ein Verfahren zur Adressvergabe für sichere Busteilnehmer bekannt, die vorzugsweise an einem ringförmigen Feldbus nach dem Interbus-Standard angeschlossen sind. Die sicheren Busteilnehmer weisen eine sichere Kommunuikationsschicht auf, die auch Safety-Communication-Layer-Slave (SCLS) genannt wird, um sicherer Nachrichten erzeugen und austauschen zu können. An den Feldbus ist ferner ein Interbus-Master angeschlossen, dem eine sichere Steuereinheit mit einer sicheren Kommunikations-Schicht zugeordnet ist, die auch Safety-Communication-Layer-Master (SCLM) genannt wird. Um eine sichere Datenübertragung zwischen dem Interbus-Master und sicheren Busteilnehmern zu ermöglichen, wird der SCLS jedes sichern Busteilnehmers eine Connection-ID zugeordnet. Mit Hilfe der Connection-ID wird erreicht, dass die SCLM immer mit einer gewünschten SCLS kommunizieren kann.

Mit keinem der eingangs genannten Systeme ist es jedoch möglich ohne Verwendung von Adressschaltern an sicheren Teilnehmern sowohl bei der ersten Inbetriebnahme als auch bei wiederholtem Anlauf einer Steuer- und Datenübertragungsanlage zuverlässig prüfen zu können, ob ein sicherer Teilnehmer auch wirklich am gewünschten Einbauort der Steuer- und Datenübertragungsanlage angeschaltet ist.

Der vorliegenden Erfindung liegt demzufolge die Aufgabe zugrunde, ein Verfahren sowie eine Steuer- und Datenübertragungsanlage bereitzustellen, mit denen eine zuverlässige Überprüfung des Einbauorts eines sicheren Teilnehmers jederzeit möglich ist.

Ein Kerngedanke der Erfindung ist darin zu sehen, in zwei unabhängigen Kommunikationszyklen einem sicheren Teilnehmer eine Ortskennung zu übermitteln und dann einen Bezug zwischen der, dem sicheren Teilnehmer zugeordneten Ortskennung und dessen Einbauort derart herzustellen, dass zuverlässig geprüft werden kann, ob der sichere Teilnehmer an dem Einbauort angeschaltet ist, den ein Anwender auch tatsächlich dafür vorgesehen hat.

Das oben genannte technische Problem wird zum einen durch die Verfahrensschritte des Anspruchs 1 gelöst.

Danach ist ein Verfahren zum Überprüfen des Einbauortes wenigstens eines sicheren, an eine Steuer- und Datenübertragungsanlage angeschalteten Teilnehmers vorgesehen, wobei an die Steuer- und Datenübertragungsanlage eine nicht sichere Kommunikationssteuereinrichtung angeschaltet ist, welcher eine sichere Steuereinrichtung zugeordnet ist. Die nicht sichere Kommunikationssteuereinrichtung kennt die Position jedes angeschalteten Teilnehmers in der Steuer- und Datenübertragungsanlage.

In der nicht sicheren Kommunikationssteuereinrichtung wird ein erster Konfigurationsdatensatz abgelegt, der Angaben über die Position aller angeschalteten Teilnehmer bezüglich der Steuer- und Datenübertragungsanlage und eine individuelle Ortskennung für jeden sicheren Teilnehmer enthält. Der Konfigurationsdatensatz kann von einem Anwender erstellt werden, der die Steuer- und Datenübertragungsanlage nach seinen Verstellungen projektieren will. Mit anderen Worten spiegelt der erst Konfigurationsdatensatz vorzugsweise den projektierten Aufbau der Steuer- und Datenübertragungsanlages wieder. Ein zweiter Konfigurationsdatensatz wird in der sicheren Steuereinrichtung abgelegt. Der zweite Konfigurationsdatensatz enthält eine Liste nur der angeschalteten sicheren Teilnehmer sowie eine individuelle Ortskennung für jeden sicheren Teilnehmer.

An dieser Stelle sei erwähnt, dass insbesondere bei Steuer-und Datenübertragungsanlagen gemäß dem Interbus-Standard entsprechende Konfigurations-Tools bekannt sind, mit denen der Anwender die entsprechenden Konfigurationsdatensätze erstellen kann.

Nach dieser eigentlichen Konfigurationsphase werden in einem ersten Kommunikationszyklus jeweils eine individuelle Ortskennung von der nicht sicheren Kommunikationssteuereinrichtung zu jedem sicheren Teilnehmer, der an der Steuer- und Datenübertragungsanlage angeschaltet ist, übertragen. Die im zweiten Konfigurationsdatensatz enthaltenen individuellen Ortskennungen werden in sicheren Nachrichten von der sicheren Steuereinrichtung zur nicht sicheren Kommunikationssteuereinrichtung übertragen. Nunmehr werden in einem zweiten Kommunikationszyklus die in den empfangenen sicheren Nachrichten enthaltenen individuellen Ortskennungen von der nicht sicheren Kommunikationssteuereinrichtung zu den jeweiligen sicheren Teilnehmern übertragen. Jeder sichere Teilnehmer vergleicht die im ersten und zweiten Kommunikätionszyklus empfangen individuellen Ortskennungen. Wenn ein sicherer Teilnehmer eine Übereinstimmung zwischen den individuellen Ortskennungen feststellt, wird geprüft, ob in dem jeweiligen sicheren Teilnehmer bereits eine Referenz-Ortskennung abgelegt ist. Ist eine Referenz-Ortskennung in dem jeweiligen sicheren Teilnehmer abgelegt, wird die individuelle Ortskennung, die im ersten oder im zweiten Kommunikationszyklus empfangen worden ist, mit der Re.ferenz-Ortskennung verglichen. Stimmt die individuelle Ortskennung mit der gespeicherten Referenz-Ortskennung des jeweiligen sicheren Teilnehmers überein, wird der sicheren Steuereinrichtung signalisiert, dass der jeweilige sichere Busteilnehmer am vorbestimmten Einbauort angeschaltet ist.

Dank der Übertragung einer individuellen Ortskennung in zwei separaten Kommunikationszyklen und dem Vergleich der empfangenen individuellen Ortskennungen mit einer im sicheren Teilnehmer gespeicherten Referenz-Ortskennung kann zuverlässig geprüft werden, ob der jeweilige sichere Teilnehmer auch tatsächlich an dem vom Anwender vorgesehenen Einbauort der Steuer- und Datenübertragungsanlage angeschaltet ist.

Vorteilhafte Weiterbildungen sind Gegenstand der Unteransprüche.

Das Verfahren zur Überprüfung des Einbauortes eines sicheren Busteilnehmers ist auch dazu geeignet, bei der ersten Inbetriebnahme der Steuer- und Datenübertragungsanlage zuverlässig prüfen zu können, ob alle sicheren Teilnehmer auch an den Einbauorten angeschaltet sind, die bei der Konfigurationsphase vom Anwender vorgegeben worden sind. Hierzu wird die im ersten oder zweiten Kommunikationszyklus übertragene individuelle Ortskennung als Referenz-Ortskennung im jeweiligen sicheren Teilnehmer gespeichert, wenn bisher noch keine Referenz-Ortskennung oder alternativ eine vorbestimmte Standard-Referenz-Ortskennung abgelegt worden ist. Die sichere Steuereinrichtung erhält von dem jeweiligen sicheren Teilnehmer eine sichere Nachricht, die Informationen darüber enthält, dass die in dem ersten und zweiten Kommunikationszyklus übertragenen Ortskennungen übereinstimmen und dass noch keine Referenz-Ortskennung im jeweiligen sicheren Teilnehmer gespeichert ist. Unter Ansprechen auf die empfangene sichere Nachricht informiert die sichere Steuereinrichtung eine Bedienperson darüber, dass die in dem ersten und zweiten Kommunikationszyklus übertragenen Ortskennungen übereinstimmen und dass noch keine Referenz-Ortskennung im jeweiligen sicheren Teilnehmer gespeichert ist. Die sichere Steuereinrichtung fordert dann die Bedienperson auf, zu bestätigen, dass der jeweilige sichere Teilnehmer am vorbestimmten Einbauort angeschaltet ist.

Auch während eines erneuten Anlaufs der Steuer- und Datenübertragungsanlages kann jederzeit zuverlässig überprüft werden, ob die jeweiligen sicheren Teilnehmer am richtigen Einbauort angeschaltet sind. Hierzu wird bei einer Übereinstimmung-der im ersten und zweiten Kommunikationszyklus empfangenen individuellen Ortskennungen die im jeweiligen sicheren Teilnehmer gespeicherte Referenzen-Ortskennung mit der individuellen Ortskennung verglichen. Wenn die Referenz-Ortskennung nicht mit der individuellen Ortskennung übereinstimmt, wird die Referenz-Ortskennung durch die jeweilige individuelle Ortskennung überschrieben. Der jeweilige sichere Teilnehmer sendet dann eine sichere Nachricht zur sicheren Steuereinrichtung, die Informationen darüber enthält, dass die im ersten und zweiten Kommunikationszyklus empfangenen individuellen Ortskennungen nicht mit der gespeicherten Referenz-Ortskennung übereinstimmen. Die sichere Steuereinrichtung kann unter Ansprechen auf die empfangene sichere Nachricht die Bedienperson entsprechend informieren und auffordern, den Einbauort des jeweiligen sicheren Busteilnehmers zu bestätigen.

Damit sichere Nachrichten zwischen sicheren Teilnehmern und der sichern Steuereinrichtung übertragen werden können, können vorab beispielsweise sogenannte Connection IDs gemäß dem in der DE 10 2005 019970 A1 beschrieben Verfahren zwischen den sicheren Teilnehmern und der sicheren Steuereinrichtung vereinbart werden.

Mit dem vorliegenden Verfahren zum Überprüfen des Einbauortes ist es möglich, Fehler in der Konfiguration der Steuer- und Datenübertragungsanlage, dem Aufbau und der Adressierung der Steuer- und Datenübertragungsanlage sowie andere Anwenderfehler zu erkennen. Dadurch kann vermieden werden, dass die Steuer- und Datenübertragungsanlage beschädigt und/oder Bedienpersonen verletzt werden. Hierzu werden die jeweiligen sicheren Teilnehmer und/oder die Steuer- und Datenübertragungsanlage in einen sicheren Zustand überführt, wenn die Bedienperson nicht bestätigt, dass der jeweilige sichere Teilnehmer am vorbestimmten Einbauort angeschaltet ist, oder wenn der jeweilige sichere Teilnehmer keine Übereinstimmung der im ersten und zweiten Kommunikationszyklus übertragenen individuellen Ortskennungen feststellt.

Um sicherstellen zu können, dass im sicheren Teilnehmer eine Referenz-Ortskennung nur gespeichert wird, wenn der jeweilige sichere Busteilnehmer auch am gewünschten Einbauort angeschaltet ist, wird die Referenz-Ortskennung im jeweiligen sicheren Teilnehmer erst dann durch die individuelle Ortskennung ersetzt, wenn die Bedienperson zuvor bestätigt hat, dass der jeweilige sichere Teilnehmer am vorbestimmten Einbauort angeschaltet ist.

Das Verfahren kann besonders vorteilhaft angewendet werden, wenn die Steuer- und Datenübertragungsanlage ringförmig und als Feldbus gemäß dem Interbus-Standard ausgebildet ist. In diesem Fall müssen den am Feldbus angeschalteten Teilnehmern, die auch Busteilnehmer genannt werden, keine Teilnehmeradressen zugeordnet werden. Denn der Interbus arbeitet in der Art eines Schieberegisters, bei dem die Busteilnehmer ringförmig miteinander verbunden sind und die einzelnen Speicherplätze des Schieberegisters bilden. Aufgrund dieser speziellen Interbus-Konfiguration kann die nicht sichere Kommunikationssteuereinrichtung die Position aller Busteilnehmer während eines Identifikations-Zyklus und/oder Datenzyklus kennen lernen, und zwar sowohl hinsichtlich der Schieberegister für ID-Zyklen als auch hinsichtlich der Position im Schieberegister für Datenzyklen. Wird ein Interbus als Steuer- und Datenübertragungsanlage verwendet, entspricht der erste Kommunikationszyklus dem ID-Zyklus und der zweite Kommunikationszyklus dem Datenzyklus des Interbus-Protokolls. Die individuellen Ortkennungen, die für die an den Feldbus angeschalteten sicheren Busteilnehmern bestimmt sind, werden an den entsprechenden Stellen innerhalb eines Summenrahmens von der nicht sicheren Kommunikationssteuereinrichtung zu den jeweiligen sicheren Busteilnehmern übertragen.

Um sichere Busteilnehmer bei der ersten Inbetriebnahme der Steuer- und Datenübertragungsanlage oder bei einem Teilnehmertausch zuverlässig an der Steuer- und Datenübertragungsanlage anmelden zu können, werden die im sicheren Busteilnehmer gespeicherte Seriennummer und wenigstens ein teilnehmerspezifischer Parameter, insbesondere die Herstellerkennung und der Gerätetyp, in wenigstens einer sicheren Nachricht zur sicheren Steuereinrichtung übertragen. Die Seriennummer wird dem zweiten Konfigurationsdatensatz hinzugefügt, wenn die in der sicheren Nachricht enthaltenen teilnehmerspezifischen Parameter mit den teilnehmerspezifischen Parametern übereinstimmen, die hinsichtlich des jeweiligen sicheren Teilnehmers in der sicheren Steuereinrichtung abgespeichert sind. Auf diese Weise erfolgt die Anmeldung des jeweiligen sicheren Busteilnehmers an der Steuer- und Datenübertragungsanlage.

Die im zweiten Kommunikationszyklus von der nicht sicheren Kommunikationssteuereinheit zu übertragenden Ortskennungen können zunächst aus den von der sicheren Steuereinrichtung kommenden sicheren Nachrichten extrahiert und in neue sichere Nachrichten eingebettet und dann zum jeweiligen sicheren Busteilnehmer übertragen werden.

Um die Sicherheitsanforderungen bei sicherheitskritischen Prozessen einhalten zu können, kann das vorliegende Verfahren dafür sorgen, dass die von der sicheren Steuereinrichtung an die nicht sichere Steuereinrichtung übertragenen sicheren Nachrichten, welche die individuellen Ortskennungen enthalten, ungelesen an die jeweiligen sicheren Teilnehmer weitergeleitet werden.

Das oben genannte technische Problem wird ebenfalls durch die Merkmale des Anspruchs 10 gelöst.

Danach ist eine Steuer-und Datenübertragungsanlage vorgesehen, die insbesondere der Durchführung des Verfahrens nach einem der Ansprüche 1 bis 9 dient.

Die Steuer- und Datenübertragungsanlage weist eine Übertragungseinrichtung auf, an welcher wenigstens eine nicht sichere Kommunikationssteuereinrichtung und wenigstens ein sicherer Teilnehmer angeschaltet sind. Die nicht sichere Kommunikationssteuereinrichtung kennt die Position aller an ein Übertragungsmedium angeschalteten Teilnehmer. Weiterhin weist die nicht sichere Kommunikationssteuereinrichtung eine Speichereinrichtung zum Speichern eines ersten Konfigurationsdatensatzes auf, der Angaben über die Position aller angeschalteten Teilnehmer, das sind sichere und/oder nicht sichere Teilnehmer, bezüglich der Steuer- und Datenübertragungsanlages und eine individuelle Ortskennung für jeden sicheren Teilnehmer enthält. Weiterhin ist der nicht sicheren Kommunikationssteuereinrichtung eine sichere Steuereinrichtung zugeordnet, die eine Speichereinrichtüng zum Speichern eines zweiten Konfigurationsdatensatzes aufweist, der eine Liste nur der angeschalteten sicheren Teilnehmer sowie eine individuelle Ortskennung für jeden sicheren Teilnehmer enthält. Die sichere Steuereinrichtung ist zum Erzeugen und Übertragen einer sicheren Nachricht, die die individuelle Ortskennung eines sicheren Teilnehmers enthält, zur nicht sicheren Kommunikationssteuereinrichtung ausgebildet. Die nicht sichere Steuereinrichtung ist zum Übertragen von individuellen Ortskennungen zu sicheren Busteilnehmern während eines ersten Kommunikationszyklus und zum Übertragen der von der sicheren Steuereinrichtung kommenden individuellen Ortskennungen zu den sicheren Busteilnehmern während eines zweiten Kommunikationszyklus ausgebildet.

Jeder sichere Teilnehmer weist eine Speichereinrichtung zum Speichern einer Referenz-Ortskennung, eine Einrichtung zum Vergleichen der während des ersten und zweiten Kommunikationszyklus empfangenen individuellen Ortskennung, eine Einrichtung zum Vergleichen der empfangenen individuellen Ortskennungen mit einer Referenz-Ortskennung und eine Einrichtung zum Übertragung einer sicheren Nachricht zur sicheren Steuereinrichtung auf, wobei die sichere Nachricht eine Information über die Vergleichsergebnisse enthält. Die sichere Steuereinrichtung kann unter Ansprechen auf die von einem sicheren Teilnehmer empfangene sichere Nachricht eine Bedienperson auffordern, zu bestätigen, dass der sichere Busteilnehmer am vorbestimmten Einbauort enthalten ist.

Um im Fehlerfall eine Beschädigung der Steuer- und Datenübertragungsanlage sowie eine Verletzung von Personen verhindern zu können, ist eine Einrichtung zum Überführen eines sicheren Teilnehmers und/oder der Steuer- und Datenübertragungsanlage in einen sicheren Zustand vorgesehen, und zwar dann, wenn die Bedienperson nicht bestätigt, dass der entsprechende sichere Busteilnehmer am vorbestimmten Einbauort angeschaltet ist, oder wenn der jeweilige sichere Busteilnehmer feststellt, dass die im ersten und zweiten Kommunikationszyklus übertragenen individuellen Ortskennungen nicht übereinstimmen.

Die sichere Steuereinrichtung ist vorzugsweise über einen Koppelspeicher mit der nicht sicheren Kommunikationssteuereinrichtung verbunden.

Weiterhin kann eine programmierbare Steuereinheit vorgesehen sein, die unter Ansprechen darauf, dass die im ersten und zweiten Kommunikationszyklus zu einem sicheren Teilnehmer übertragenen individuellen Ortskennungen nicht mit der Referenz-Ortskennung übereinstimmen, den jeweiligen sicheren Busteilnehmer veranlasst, die Referenz-Ortskennung durch die individuelle Ortskennung zu überschreiben.

Die Erfindung wird nachfolgend anhand eines Ausführungsbeispiels in Verbindung mit den beigefügten Zeichnungen näher erläutert.

Es zeigen:
- Fig. 1: eine beispielhafte Steuer- und Datenübertragungsanlage, in der die Erfindung verwirklicht ist,
- Fig. 2: ein detailliertes Blockschaltbild des in Figur 1 gezeigten sicheren Busteilnehmers,
- Fig. 3: einen während eines Identifikationszyklus übertragenen Summenrahmen gemäß dem Interbus-Protokoll, und
- Fig. 4: einen während eines Datenzyklus übertragenen Summenrähmen gemäß dem Interbus-Protokoll.

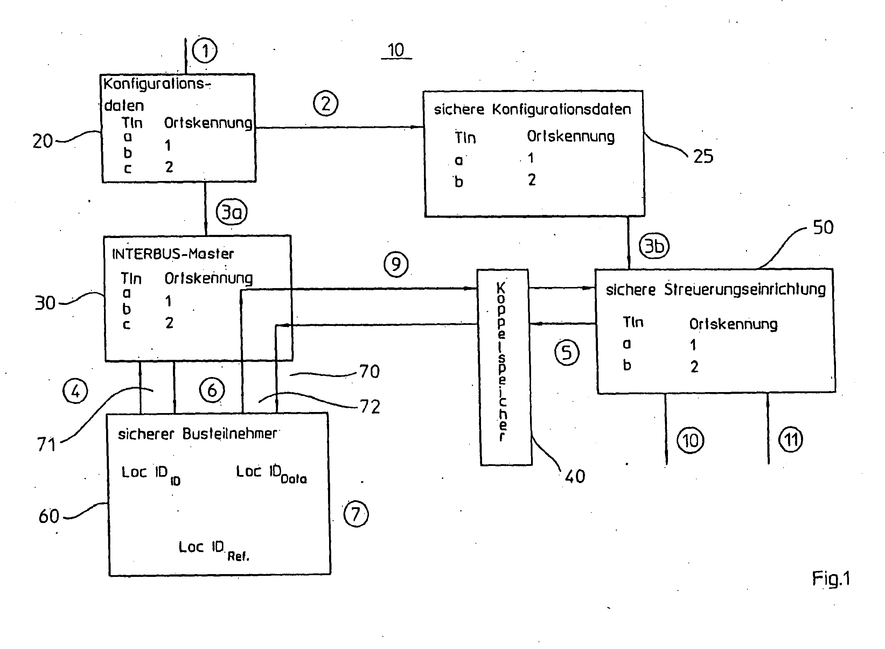

Fig. 1 zeigt in schematischer Darstellung eine allgemein mit 10 bezeichnetes Steuer- und Datenübertragungsanlage, in dem Busteilnehmer ringförmig miteinander verbunden sind. Die Steuer- und Datenübertragungsanlage 10 ist im vorliegenden Beispiel ein Interbus-Übertragungssystem, in welchem die Erfindung verwirklicht ist. Das Interbus-Übertragungssystem ist beispielsweise in dem Fachbuch "Interbus-S: Grundlagen und Praxis" von A. Baginski et al., 1994 Hüthig Buchverlag GmbH, Heidelberg beschrieben.

Das in Fig. 1 dargestellte Interbus-Übertragungssystem 10 umfasst einen Busteilnehmer 30, der als nicht sichere Kommunikationssteuereinrichtung fungiert, und nachfolgend kurz Interbus-Master genannt wird. Der Interbus-Master 30 ist an einen Feldbus 70 des Interbus-Übertragungssystem 10 angeschlossen und beispielsweise über einen Koppelspeicher 40 mit einer sicheren Steuereinrichtung 50 verbunden. Die sichere Steuereinrichtung 50 ist eine Einrichtung mit einer Sicherheits-Kommunikations-Schicht. Diese wird auch als SCLM (Safety-Communication-Layer-Master) bezeichnet. Die sichere Steuereinrichtung 50 wird unter Anderem benötigt, um über den nicht sicheren Interbus-Master 30 sicherheitskritische Prozesse steuern zu können. Der Feldbus 70 ist symbolisch durch zwei Ringe 71 und 72 dargestellt, welche gemäß dem Interbus-Protokoll einen ersten Kommunikationszyklus, der als Identifizierungszyklus bekannt ist, und einen zweiten Kommunikationszyklus, der als Datenzyklus bekannt ist, repräsentieren. Lediglich der einfacheren Darstellung wegen ist nur ein Busteilnehmer 60 dargestellt, welcher an dem Feldbus 70 angeschlossen ist. Bei dem Busteilnehmer 60 handelt es sich um einen sicheren Busteilnehmer, über den in Verbindung mit der sicheren Steuereinrichtung 50 sicherheitskritische Prozesse durchgeführt werden können. Angemerkt sei noch, dass der sichere Busteilnehmer 60 ein Slave mit einer Sicherheits-Kommunikations-Schicht sein kann, welche auch als SCLS (Safety-Communication-Layer-Slave) bekannt ist. An den ringförmigen Feldbus 70 können selbstverständlich weitere sichere Busteilnehmer und auch nicht sichere Busteilnehmer angeschlossen werden. Mit Bezugszeichen 20 und 25 ist symbolisch ein Softwaretool dargestellt, mit dessen Hilfe ein Anwender das Interbus-Übertragungssystem 10 konfigurieren kann.

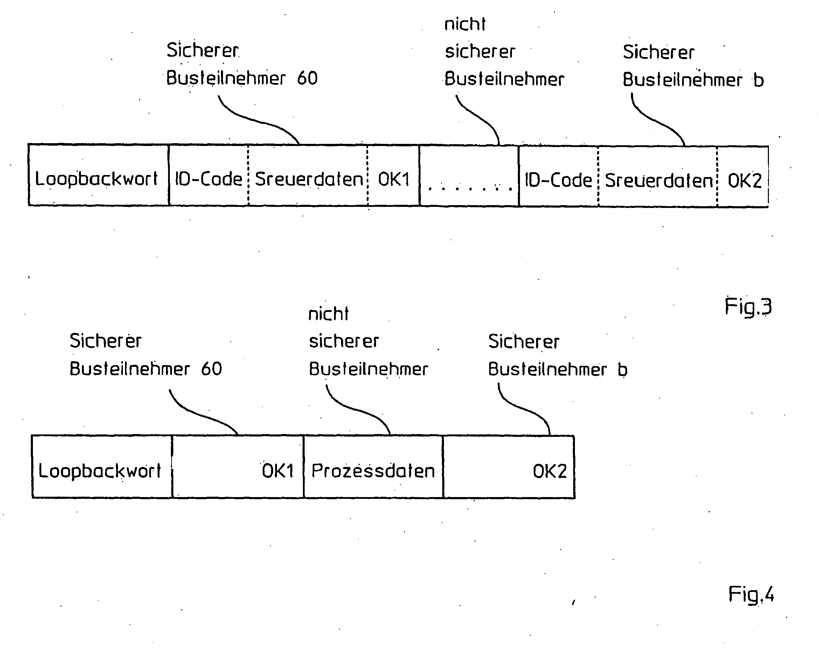

Da das Interbus-Übertragungssystem 10 einem Durchschnittsfachmann bekannt ist, genügt es darauf hinzuweisen, dass der Interbus eine Art Schieberegister ist, bei dem die Busteilnehmer ringförmig miteinander verbunden sind und die einzelnen Speicherplätze des Schieberegisters bilden. Aufgrund dieser Schieberegister-Struktur werden beim Interbus keine Teilnehmeradressen für die angeschalteten Busteilnehmer benötigt. Vielmehr lernt der Interbus-Master 30 während eines IdentifizierungsZyklus, nachfolgend kurz ID-Zyklus genannt, die Positionen der einzelnen Busteilnehmer im Ring kennen. Die Anordnung der Busteilnehmer im Interbus wird dann als Prozessbild im Interbus-Master 30 hinterlegt. Der Interbus-Master 30 kann somit jedem angeschalteten Busteilnehmer Daten zukommen lassen, indem er die für die Busteilnehmer bestimmten Daten in entsprechende Stellen eines einen Summenrahmen bildenden Telegramms schreibt, welches durch den Feldbus 70 geschickt wird. Die Busteilnehmer sind in der Lage, die für sie bestimmte Daten aus dem Telegramm auszulesen. In Fig. 3 und 4 sind beispielhafte Summenrahmen dargestellt, die gemäß dem Interbus-Protokoll aufgebaut sind und zusätzlich noch Ortskennungen für die jeweiligen sicheren Busteilnehmern enthalten.

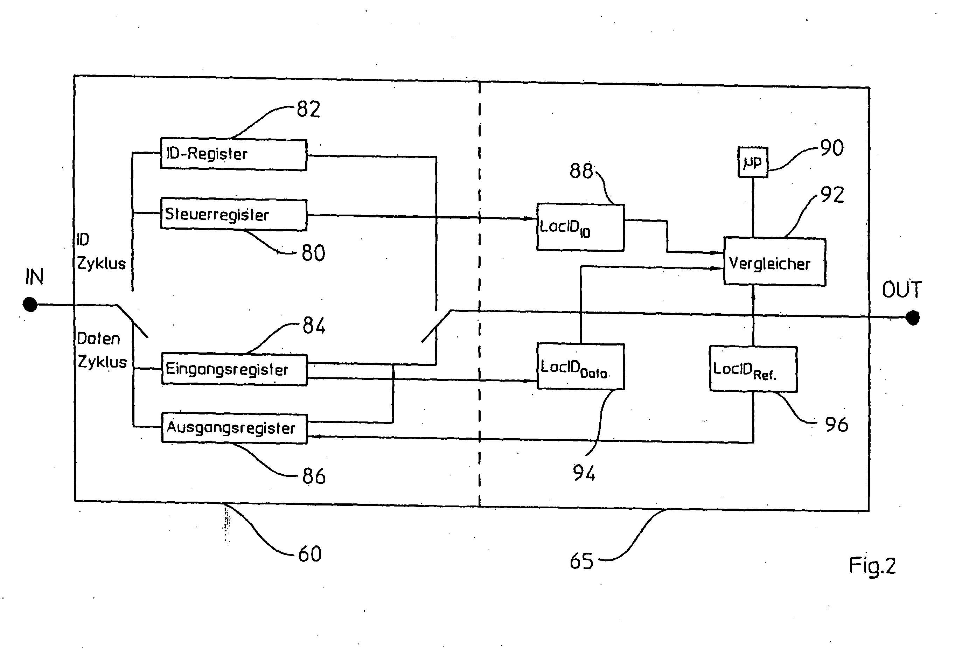

In Fig. 2 ist der in Fig. 1 dargestellte sichere Busteilnehmer 60 detaillierter dargestellt. In an sich bekannter Weise verfügt der sichere Busteilnehmer 60 über zwei Schieberegister-Abschnitte. Der mit Bezugszeichen 80 und 82 bezeichnete Schieberegister-Abschnitt wird während eines ID-Zyklus in den Feldbus 70 eingeschleift, während der andere, mit Bezugszeichen 84 und 86 bezeichnete Schieberegister-Abschnitt während eines Daten-Zyklus in den Feldbus 70 eingeschleift wird. Der während des Identifikations-Zyklus im Feldbus 70 liegende Schieberegister-Abschnitt weist ein Kontroll-Register 80 sowie ein ID-Register 82 auf. Der während eines Datenzyklus im Feldbus 70 liegende Schieberegister-Abschnitt weist ein Eingangsregister 84 und ein Ausgangsregister 86 auf. In das Eingangsregister 84 werden die vom Interbus-Master 30 kommenden Eingangsdaten eingelesen, während im Ausgangsregister 86 beispielsweise Prozessdaten abgelegt werden, die für den Interbus-Master 30 bestimmt sind. Der sichere Busteilnehmer 60 weist einen Abschnitt 65 auf, der im Wesentlichen den sicherheitsrelevanten Teil des Busteilnehmers enthält. Der gewählte Aufbau des sicheren Busteilnehmers ist jedoch nur beispielhaft zu verstehen. Der sichere Busteilnehmer 60 weist einen Speicher 88 auf, in den, wie nachfolgend noch näher erläutert wird, eine Ortskennung abgelegt werden kann, die wir während eines ID-Zyklus vom Interbus-Master 30 zum sicheren Busteilnehmer 60 übertragen wird. Ein weiterer Speicher 94 ist vorgesehen, in dem eine Ortskennung abgelegt werden kann, die während eines Datenzyklus zum sicheren Busteilnehmer 60 übertragen wird. Weiterhin ist ein Speicher 96 vorgesehen, in welchen eine Referenz-Ortskennung abgelegt werden kann. Eine Vergleichereinrichtung 92 ist vorgesehen, die die Speicherinhalte der Speicher 88 und 94 mit einander vergleichen kann. Die Vergleichereinrichtung 92 ist ferner dazu ausgebildet, den Speicherinhalt des Speichers 94 oder den Speicherinhalt des Speichers 88 mit dem Speicherinhalt des Speichers 96 zu vergleichen. Die Steuerung des Busteilnehmers 60 und der Vergleichereinrichtung 92 übernimmt beispielsweise ein Mikroprozessor 90. Der sicherheitsrelevante Teil 65 des sicheren Busteilnehmers 60 wird in Verbindung mit der sicheren Steuereinrichtung 50 dazu verwendet, zu prüfen, ob der sichere Busteilnehmer 60 auch tatsächlich an dem Einbauort des Feldbuses 70 angeschaltet ist, den ein Anwender vorgesehen hat. An dieser Stelle sei bereits angemerkt, dass der Mikroprozessor 90 dafür sorgen kann, dass sichere Nachrichten erzeugt werden können, in die vorbestimmte Informationen, wie zum Beispiel "die Speicherinhalte der Speicher 88 und 94 stimmen überein", "die Speicherinhalte der Speicher 88 und 94 stimmen nicht überein", "die Speicherinhalte der Speicher 88 und 96 stimmen überein" oder "die Speicherinhalte der Speicher 88 und 96 stimmen nicht überein", eingebettet und zur sicheren Steuereinrichtung 50 übertragen werden können.

Nachfolgend wird die Funktionsweise des Interbus-Übertragungssystems 10 in Verbindung mit den Figuren 1 bis 4 näher erläutert. Insbesondere wird geschildert, wie der Einbauort des sicheren Busteilnehmers 60 im Feldbus 70 zuverlässig geprüft werden kann.

Zunächst wird während der Konfigurationsphase in Schritt 1 gemäß Fig. 1 die Konfiguration des Interbus-Übertragungssystems 10 mit Hilfe des Softwaretools 20 erstellt. Hierzu wird für jeden Busteilnehmer, der an den Feldbus 70 angeschaltet werden soll, ein Konfigurationsdatensatz erstellt. Dieser enthält unter Anderem Angaben über die Position jedes am Feldbus 70 angeschalteten Busteilnehmers. Bei dem beispielhaft beschriebenen Interbus-Übertragungssystem 10 ergeben sich die Positionen der Busteilnehmer aus der Reihenfolge, in der die Busteilnehmer in den Konfigurationsdatensätzen abgespeichert werden. Weiterhin enthalten die Konfigurationsdatensätze für jeden sicheren Busteilnehmer eine individuelle Ortskennung. Im vorliegenden Beispiel sind die Busteilnehmer a und b als sichere Teilnehmer ausgebildet, denen die individuelle Ortskennung 1 bzw. 2 zugeordnet worden ist. Der Busteilnehmer c ist als nicht sicherer Busteilnehmer implementiert. Erwähnt sei ferner, dass der unter Anderem im Softwaretool 20 angegebene Busteilnehmer a dem sicheren Busteilnehmer 60 entspricht.

Neben der Ortskennung enthält der Konfiguratinsdatensatz jedes sicheren Busteilnehmers a und b vorteilhafterweise noch den dazugehörenden Geräte-Typ sowie die Hersteller-Kennung. An dieser Stelle sei erwähnt, dass in jedem an den Feldbus 70 angeschalteten sicheren Busteilnehmer neben dem Geräte-Typ und der Hersteller-Kennung noch die Seriennummer abgespeichert sind.

In Schritt 2 gemäß Fig. 1 werden nunmehr die zu den sicheren Busteilnehmern a und b gehörenden Konfigurationsdatensätze der sicheren Programmierungsumgebung 25 übergeben. Die sicheren Busteilnehmer sind hierbei in den Konfigurationsdatensätzen in einer Reihenfolge aufgelistet, die der Reihenfolge entspricht, in der die sicheren Busteilnehmer mit Bezug zueinander am Feldbus 70 angeschaltet sind. In Schritt 3a werden dann alle im Softwaretool 20 erstellten Konfigurationsdatensätze, die sowohl die sicheren als auch die nicht sicheren Busteilnehmer erfassen, im Interbus-Master 30 hinterlegt. In Schritt 3b werden die in der sicheren Programmierungsebene 25 hinterlegten Konfigurationsdatensätze der sicheren Busteilnehmer a und b in die sichere Steuerungseinrichtung 50 eingeschrieben.

Augrund des konfigurierten Interbus-übertragungsystems 10 kennt der Interbus-Master 30 die physikalische Postion der am Feldbus 70 angeschalteten Busteilnehmer sowohl im Scheiberegister für ID-Zyklen als auch im Schieberegister für Daten-Zyklen: Entsprechend dem Interbus-Protokoll erstellt der Interbus-Master 30 nunmehr einen Summenrahmen, der in Figur 3 beispielhaft dargestellt ist. In herkömmlicher Weise wird dem Summenrahmen ein sogenanntes Loopback-Wort vorangestellt, an das sich die Steuerinformationsfelder der an den Feldbus 70 angeschalteten Busteilnehmer in einer Reihenfolge anschließen, die sich aus der physikalischen Position der jeweiligen Busteilnehmer im Feldbus 70 ergibt, die der Interbus-Master 30 kennt. Im vorliegenden Beispiel sei angenommen, dass der sichere Busteilnehmer 60 der letzte im Feldbus 70 angeschaltete Busteilnehmer ist, so dass die für diesen Busteilnehmer bestimmten Steuerinformationen unmittelbar hinter dem Loopback-Wort angeordnet'sind. Diese Steuerinformationen können einen ID-Code, andere Steuerdaten und die Ortskennung 1 des Busteilnehmers 60 enthalten. Der nicht sichere Busteilnehmer c ist unmittelbar vor dem Busteilnehmer 60 an den Feldbus 70 angeschaltet, so dass die ihm zugeordneten Steuerinformationen im folgenden Steuerinformationsfeld abgelegt werden. Da der sichere Busteilnehmer b bezüglich der Kommunikationsrichtung im Feldbus der erste Busteilnehmer ist, stehen dessen Steuerinformationen samt Ortskennung 2 im letzten Steuerfeld des Summenrahmens.

Der Summenrahmen wird nunmehr in Schritt 4 während eines ersten Kommunikationszyklus 71, im vorliegenden Beispiel ist das der ID-Zyklus-gemäß dem Interbus-Protokoll, über den Feldbus 70 zu den angeschalteten Busteilnehmern übertragen. Jeder Busteilnehmer entnimmt dann die für ihn bestimmten Steuerinformationen aus dem Summenrahmen. So schreibt der sichere Busteilnehmer 60 die Steuerinformationen, die dem Loopbackword unmittelbar folgen, in die entsprechenden Register 80 und 82, die in Fig.3 gezeigt sind. Insbesondere wird die im Summenrahmen enthaltene Ortskennung 1 vom sicheren Busteilnehmer 60 in das Steuerregister 80 geschrieben.

Angemerkt sei, dass die Ortskennung beispielsweise 7 Bits umfassen kann. Zusätzliche Bits im Summenrahmen können die Ortskennung kennzeichnen und dafür sorgen, dass sie von anderen Steuerdaten unterschieden werden kann.

Die individuelle Ortskennung 1 kann je nach Implementierung des sicheren Busteilnehmers 60 aus dem Steuerregister 80 in in den Speicher 88 geschrieben werden.

Weiterhin erzeugt die sichere Steuereinrichtung 50 für jeden sicheren Busteilnehmer unter Ansprechen auf die hinterlegten Konfigurationsdatensätze eine sichere Nachricht, die zumindest die dem sicheren Busteilnehmer zugeordnete Ortskennung enthält. Im vorliegenden Beispiel wird somit eine sichere Nachricht, welche die Ortskennung 1 enthält, für den sicheren Busteilnehmer 60 erzeugt. Eine weitere sichere Nachricht, welche die individuelle. Ortskennung 2 enthält, wird für den sicheren Busteilnehmer b erzeugt. Die sicheren Nachrichten werden in Schritt 5 über den Koppelspeicher 40 dem Interbus-Master 30 in der vorgegebenen Reihenfolge übergeben. Gemäß einer bevorzugten Ausführungsform schreibt der Interbus-Master 30 die sicheren Nachrichten ungelesen in einen Summenrahmen ein, der in Fig. 4 beispielhaft dargestellt ist. Der Summenrahmen umfasst wiederum ein Loopbackwort, ein erstes Datenfeld, welches zumindest die ortskennung 1 des sicheren Busteilnehmers 60 enthält, ein zweites Datenfeld, welches' beispielsweise Prozessdaten des nicht sicheren Busteilnehmers c enthält, und ein Datenfeld, welches zumindest die Ortskennung 2 des sicheren Busteilnehmers c enthält. Die Reihenfolge der Datenfelder im Summenrahmen wird wiederum durch die Reihenfolge der am Feldbus 70 angeschlossenen Busteilnehmer festgelegt. Da der Interbus-Master 30 die Positionen aller am Feldbus 30 angeschalteten Busteilnehmer kennt, kann er in Abhängigkeit der Reihenfolge, in der er die sicheren Nachrichten von der sicheren Steuereinrichtung 50 empfängt, diese an die richtigen Stellen in den Summenrahmen einbetten.

In Schritt 6 überträgt der Interbus-Master 30 den Summenrahmen, der die sicheren Nachrichten und somit die Ortskennungen 1 und 2 enthält, über einen zweiten Kommunikationszyklus 72, der dem Datenzyklus des Interbus-Protokolls entspricht, über den Feldbus 70. Jeder Busteilnehmer liest die für ihn bestimmten Daten in ein Eingangsregister ein. Im vorliegenden Beispiel liest der sichere Busteilnehmer 60 die unmittelbar dem Loopbackwort folgenden Daten, die die Ortskennung 1 enthalten, in das Eingangsregister 84. Die Ortskennung 1 kann dann aus dem Eingangsregister 84 in den Speicher 94 geschrieben werden.

Nachfolgend wird ein erstes Szenario betrachtet, bei dem das Interbus-Übertragungssystem 10 zum ersten Mal in Betrieb genommen wird. Dies bedeutet, dass in dem Speicher 96 noch keine Referenz-Ortskennung hinterlegt worden ist. Alternativ könnte ein Standardwert im Speicher 96 hinterlegt sein, der dem Mikroprozessor 90 signalisiert, dass das Interbus-Übertragungssystems 10 bisher noch nicht in Betrieb genommen wurde.

Die in den Speichern 88 und 94 hinterlegten individuellen Ortskennungen werden gemäß Schritt 7 dem Vergleicher 92 zugeführt, welcher prüft, ob die Speicherinhalte, d. h. die abgelegten Ortskennungen, übereinstimmen. Stellt der Vergleicher 92 eine Übereinstimmung der beiden in den Speichern 88 und 94 abgelegten Ortskennungen fest, kann die im Speicher 88 oder die im Speicher 94 hinterlegte Ortskennung 1 unmittelbar in den Speicher 96 als Referenz-Ortskennung abgelegt werden.

Der Mikroprozessor 90 erzeugt nunmehr eine sichere Nachricht, in welcher zum Beispiel der Gerätetyp, die Herstellerkennung und die Seriennummer des sicheren Busteilnehmers 60 eingeschrieben werden. Zusätzlich enthält die sichere Nachricht einen Hinweis darüber, dass die in den Speichern 88.und 94 abgelegte Ortskennungen übereinstimmen. Diese sichere Nachricht wird in das Ausgangsregister 86 geschrieben. Während eines weiteren Datenzyklus wird der Inhalt des Ausgangsregisters 86 in einen entsprechenden Summenrahmen eingebettet, der dann in Schritt 8 über den Ausgang des Busteilnehmers 60 an den Feldbus 70 angelegt und von dort zum Interbus-Master 30 übertragen wird. Der Interbus-Master 30 entnimmt aus dem empfangenen Summenrahmen alle sicheren Nachrichten und überträgt diese in Schritt 9 über den Koppelspeicher 90 zur sicheren Steuereinrichtung 50. Angemerkt sei, dass bei einer vorteilhaften Ausführungsform der Interbus-Master 30 die sicheren Nachrichten ungelesen an die sichere Steuereinrichtung 50 weiterleitet. Die sichere Steuereinrichtung 50 erfährt anhand der für den Busteilnehmer 60 bestimmten sicheren Nachricht, dass die in den Speicher 88 und 94 hinterlegten Ortskennungen übereinstimmen. Dies bedeutet dass der sichere Busteilnehmer 60 an dem richtigen Einbauort innerhalb des Feldbusses 70 angeschaltet ist, so dass nunmehr die Anmeldung des sicheren Busteilnehmers 60 am Interbus-Übertragungssystem 10 erfolgen kann. Die Anmeldung des sichern Busteilnehmers 60 erfolgt dadurch, dass die in der sicheren Nachricht enthaltene Seriennummer in der sicheren Steuereinrichtung 50 abgelegt wird. Die sichere Steuereinrichtung 50 kann gemäß Schritt 10 auf einem integrieren Display einem Anwender anzeigen, dass der Busteilnehmer 60 am richtigen Einbauort angeschlossen und angemeldet worden ist. Die sichere Steuereinrichtung 50 kann alternativ oder zusätzlich über eine Schnittstelle verfügen, über die diese Hinweise an eine externe Einrichtung übertragen werden können.

Nunmehr wird ein zweites Szenario betrachtet. Hierbei sei angenommen, dass das Interbus-Übertragungssystem 10 bereits ordnungsgemäß in Betrieb genommen worden ist, so dass im Speicher 96 des Busteilnehmers 60 die Referenz-Ortskennung 1 gespeichert ist. Weiterhin sei angenommen, dass das Interbus-Übertragungssystem 10 nach einem gewünschten oder unerwünschten Stillstand erneut anlaufen soll.

Ähnlich den Erläuterungen hinsichtlich des ersten Szenarios werden vor dem Anlauf des Intebus-Übertragungssystems 10 während eines Identifikations-Zyklus vom Interbus-Master 30 die individuellen Ortskennungen der sicheren Busteilnehmer 60 und b in einem als Summenrahmen aufgebauten Telegramm zu den jeweiligen Busteilnehmern übertragen. Der sichere Busteilnehmer 60 liest die für ihn bestimmten Steuerinformationen einschließlich der Ortskennung aus dem Telegramm aus und schreibt die Ortskennung in den Speicher 88. Die sichere Steuereinrichtung 50 erzeugt wiederum sichere Nachrichten, die die jeweiligen Ortskennungen für die sicheren Busteilnehmer 60 und b enthalten und überträgt diese über den Koppelspeicher 40 zum Interbus-Master 30. Der Interbus-Master 30 bettet die sicheren Nachrichten an entsprechende Stellen eines Summenrahmens ein und überträgt die sicheren Nachrichten in einem Datenzyklus zu den jeweiligen sicheren Busteilnehmern. Der sichere Busteilnehmer 60 entnimmt dem ankommenden Summenrahmen die für ihn bestimmte sichere Nachricht und schreibt die darin enthaltene Ortskennung in den Speicher 94.

Im Vergleicher 92 werden nunmehr die Inhalte der beiden Speicher 88 und 94 miteinander verglichen.

Bei einem ersten Unterfall sei angenommen, dass der Vergleicher 92 festgestellt hat, dass die Speicherinhalte der Speicher 88 und 94 übereinstimmen. Das bedeutet, dass die in den beiden separaten Kommunikationszyklen übertragenen Ortskennungen identisch sind. Darauf hin vergleicht der Vergleicher 92 die im Speicher 96 hinterlegte Referenz-Ortskennung mit der im Speicher 88 oder im Speicher 94 hinterlegten Ortskennung. Stimmt die individuelle Ortskennung mit der Referenz-Ortskennung überein, ist sichergestellt, dass der sichere Busteilnehmer 60 an dem für ihn vorgesehenen Einbauort innerhalb des Feldbuses 70 angeschlossen ist. Unter Steuerung des Mikroprozessors 90 wird daraufhin eine sichere Nachricht erzeugt, die zumindest eine Information darüber enthält, dass die Referenz-Ortskennung und die in den Speichern 88 und 94 gespeicherten Ortskennungen übereinstimmen. Zusätzlich kann die sichere Nachricht die Herstellerkennung, die Seriennummer und/oder den Gerätetyp des sicheren Busteilnehmers 60 enthalten. Die sichere Nachricht wird im Ausgangsregister 86 zwischengespeichert. Während eines entsprechenden Datenzyklus wird sie in einen Summenrahmen eingebettet und über den Interbus-Master 30 und den Koppelspeicher 40 weiter zur sicheren Steuereinrichtung 50 übertragen. Unter Ansprechen auf die sichere Nachricht signalisiert die sichere Steuereinrichtung 50 dem Anwender, dass der sichere Busteilnehmer 60 sowohl im ersten als auch im zweiten Kommunikationszyklus die gleiche Ortskennung erhalten hat, die ferner mit der gespeicherten Referenz-Ortskennung übereinstimmt. Damit ist sicher gestellt, dass der Busteilnehmer 60 am vorbestimmten Einbauort angeschaltet ist.

Sobald feststeht, dass alle sicheren Busteilnehmer an den für sie vorbestimmten Einbauorten angeschaltet sind, kann das Interbus-Übertragungssystem 10 anlaufen und es können Prozessdaten übertragen werden.

Angenommen sei nunmehr ein zweiter Unterfall, bei dem der Vergleicher 92 des sicheren Busteilnehmers 60 festgestellt hat, dass die in den Speichern 88 und 94 hinterlegten Ortskennungen nicht übereinstimmen. In diesem Fall sorgt der Mikroprozessor 90 dafür, dass der sichere Busteilnehmer 60 in einen sicheren Zustand überführt, eine sichere Nachricht, die zumindest den Gerätetyp des sicheren Busteilnehmers 60 enthält, erzeugt und zur sicheren Steuereinrichtung 50 übertragen wird. Unter Ansprechen auf die sichere Nachricht kann die sichere Steuereinrichtung 50 den Anwender darüber informieren, dass ein Fehler aufgetreten ist. Die sichere Steuereinrichtung 50 kann dann automatisch oder durch den Anwender veranlasst das gesamte Interbus-Übertragungssystem 10 abschaltet oder in einen sicheren Zustand zu überführen.

Angenommen sei ein dritter Unterfall, bei dem der Vergleicher 92 festgestellt hat, dass die in den Speichern 88 und 94 hinterlegten Ortskennungen, aber nicht mit der im Speicher 96 hinterlegten Referenz-Ortskennung 1 übereinstimmen. Daraufhin erzeugt der Mikroprozessor 90 eine sichere Nachricht, die vorzugsweise den Gerätetyp, die Herstellerkennung, die Seriennummer des sicheren Busteilnehmers 60 und eine Information enthält, die anzeigt, dass ein Systemfehler vorliegt oder der sichere Busteilnehmer ausgetauscht oder an einem anderen Einbauort angeschaltet worden ist.

Die sichere Nachricht wird, wie oben beschrieben, während eines Datenzyklus in einem Summenrahmen über den Interbus-Master, den Koppelspeicher 40 zur sicheren Steuereinrichtung 50 übertragen. Unter Ansprechen auf die sichere Nachricht meldet die sichere Steuereinrichtung 50 in Schritt 10 dem Anwender, dass die zum sichern Busteilnehmer 60 übertragenen individuelle Ortskennung nicht mit der im Speicher 96 hinterlegten Referenz-Ortskennung übereinstimmen. Ein Grund hierfür kann darin liegen, dass der Anwender entweder den sicheren Busteilnehmer 60 ausgetauscht oder an einem anderen Ort innerhalb des Feldbuses 70 angeschaltet hat.

Anhand der in der sicheren Nachricht übertragenen Herstellerkennung, dem Geräte-Typ und/oder der Seriennummer des sicheren Busteilnehmers 60 sowie der in der sicheren Steuereinrichtung 50 abgelegten Konfigurationsdatensätzen kann geprüft werden, ob ein Teilnehmertausch stattgefunden hat oder ob aus anderen Gründen eine falsche Ortskennung dem sicheren Busteilnehmer 60 übermittelt worden ist.

Hat der Anwender tatsächlich den sicheren Busteilnehmer 60 ausgetauscht und stimmt die in der sicheren Nachricht empfangene Herstellerkennung und/oder der Gerätetyp mit dem Konfigurationsdatensatz, der in der sicheren Steuereinrichtung 50 abgelegt ist überein, wird der Anwender aufgefordert, die Ortskennungsänderung gegenüber der sicheren Steuereinrichtung 50 zu bestätigen oder abzulehnen. Wenn der Anwender die Ortskennungsänderung bestätigt hat, wird die Seriennummer des jeweiligen sicheren Busteilnehmers in dem Konfigurationsdatensatz, welcher in der sichern Steuereinrichtung 50 abgelegt ist, überschrieben.

Die sichere Steuereinrichtung 50 kann gemäß einem Ausführungsbeispiel daraufhin eine sichere Nachricht, welche den Bestätigungshinweis und zum Beispiel die Ortskennung, den Geräte-Typ und/oder die Herstellerkennung des neuen sicheren Busteilnehmers enthält, zum Interbus-Master 30 übertragen, der daraufhin in einem weiteren Datenzyklus die sichere Nachricht in einem Summenrahmen zum neuen sicheren Busteilnehmer überträgt. Unter Ansprechen auf die sichere Nachricht sorgt der Mikroprozessor 90 des neuen sicheren Busteilnehmers dafür, dass die Ortskennung, welche im Speicher 88 oder im Speicher 94 gespeichert ist, als neue Referenz-Ortskennung in den Speicher 96 übernommen wird.

Alternativ kann die neue Ortskennung auch ohne vorherige Bestätigung des neuen Einbauortes durch den Anwender aus dem Speicher 88 oder aus dem Speicher 94 in den Speicher 96 übernommen werden.

Wird hingegen die Ortskennungsänderung nicht vom Anwender bestätigt, sorgt die sichere Steuereinrichtung 50 und/oder der sichere Busteilnehmer dafür, dass der sichere Busteilnehmer und/oder die Steuer- und Datenübertragungsanlage in einen sicheren Zustand gefahren werden.

Anzumerken ist, dass ein Teilnehmertausch oder das Anschalten eines sicheren Busteilnehmers an einen anderen Einbauort auch dann erkannt werden kann, wenn zufälliger Weise die zu ihm während eines ersten und zweiten Kommunikationszklus übertragenen Ortskennungen mit der im Speicher 96 abgelegten Referenz-Ortskennung übereinstimmen. In diesem Fall kann die sichere Steuereinrichtung 50 anhand der vom sicheren Busteilnehmer in der sicheren Nachricht übertragenen Seriennummer oder Herstellerkennung durch Vergleich mit den hinterlegten Konfigurationsdatensätzen prüfen, ob ein Teilnehmertausch stattgefunden hat.

Da im Interbus-Master 30 alle Konfigurationsdaten, die sowohl die sicheren als auch die nicht sicheren Busteilnehmer beschreiben, enthalten sind, können Fehler bei einer Änderung der Konfiguration auch während eines Anlaufs des Interbus-Übertragungssystems 10 erkannt werden.

## Patentansprüche

1. Verfahren zum Überprüfen des Einbauortes wenigstens eines sicheren, an eine Steuer- und Datenübertragungsanlage (10) angeschalteten Teilnehmers (60), wobei an die Steuer- und Datenübertragungsanlage eine nicht sichere Kommunikationsteuereinrichtung (30) angeschaltet ist, welcher eine sichere Steuereinrichtung (50) zugeordnet ist, wobei die nicht sichere Kommunikationssteuereinrichtung (30) die Position jedes angeschalteten Teilnehmers in der Steuer- und Datenübertragungsanlage (10) kennt, mit folgenden Verfahrenschritten:
- in der nicht sicheren Kommunikationssteuereinrichtung (30) wird ein erster Konfigurationsdatensatzes abgelegt, der Angaben über die Position aller angeschalteten Teilnehmer bezüglich der Steuer- und Datenübertragungsanlages (10) und eine individuelle Ortskennung für jeden sicheren Teilnehmer (60) enthält;
- in der sicheren Steuereinrichtung (50) wird ein zweiter Konfigurationsdatensatzes abgelegt, der eine Liste nur der angeschalteten sicheren Teilnehmer sowie eine individuelle Ortskennung für jeden sicheren Teilnehmer enthält;
- in einem ersten Kommunikationszyklus wird jeweils eine individuelle Ortskennung von der nicht sicheren Kommunikationssteuereinrichtung (30) zu jedem sicheren Teilnehmer (60) übertragen;
- die im zweiten Konfigurationsdatensatz enthaltenen individuellen Ortskennungen werden in sicheren Nachrichten von der sicheren Steuereinrichtung (50) zur nicht sicheren Kommunikationssteuereinrichtung (30) übertragen,
- in einem zweiten Kommunikationszyklus werden die in den empfangenen sicheren Nachrichten enthaltenen individuellen Ortskennungen von der nicht sicheren Kommunikationssteuereinrichtung (30) zu den jeweiligen sicheren Teilnehmern (60) übertragen;
- jeder sichere Teilnehmer vergleicht die im ersten und zweiten Kommunikationszyklus empfangenen individuellen Ortskennungen;
- wenn ein sicherer Teilnehmer eine Übereinstimmung der individuellen Ortskennungen feststellt, wird geprüft, ob in dem jeweiligen sicheren Teilnehmer eine Referenz-Ortskennung abgelegt ist;
- wenn eine Referenz-Ortskennung in dem jeweiligen sicheren Teilnehmer abgelegt ist, wird die individuelle Ortskennung mit der Referenz-Ortskennung verglichen;
- wenn die individuelle Ortskennung mit der gespeicherten Referenz-Ortskennung des jeweiligen sicheren Teilnehmers übereinstimmt, wird der sicheren Steuereinrichtung (50) signalisiert, dass der jeweilige sichere Teilnehmer am vorbestimmten Einbauort angeschaltet ist.

2. Verfahren nach Anspruch 1,
**dadurch gekennzeichnet, dass**
die im ersten und/oder zweiten Kommunikationszyklus übertragene individuelle Ortskennung als Referenz-Ortskennung im jeweiligen sicheren Teilnehmer gespeichert wird, wenn bisher keine Referenz-Ortskennung abgelegt worden ist; dass die sichere Steuereinrichtung (50) von dem jeweiligen sicheren Teilnehmer eine sichere Nachricht erhält, die Informationen darüber enthält, dass die in dem ersten und zweiten Kommunikationszyklus übertragenen Ortskennungen übereinstimmen und dass noch keine Referenz-Ortskennung im jeweiligen sicheren Teilnehmer gespeichert ist; und dass - unter Ansprechen auf die empfangene sichere Nachricht die sichere Steuereinrichtung (50) eine Bedienperson darüber informiert, dass die in dem ersten und zweiten Kommunikationszyklus übertragenen Ortskennungen übereinstimmen und dass noch keine Referenz-Ortskennung im jeweiligen sicheren Teilnehmer gespeichert ist , und die Bedienperson auffordert, zu bestätigen, dass der jeweilige sichere Teilnehmer am vorbestimmten Einbauort angeschaltet ist.

3. Verfahren nach Anspruch 1,
**dadurch gekennzeichnet, dass**
bei einer Übereinstimmung der im ersten und zweiten Kommunikationszyklus empfangenen individuellen Ortskennungen die im jeweiligen sicheren Teilnehmer gespeicherte Referenz-Ortskennung mit der individuellen Ortskennung verglichen wird, dass, wenn die Referenz-Ortskennung nicht mit der individuellen Ortskennung übereinstimmt, die Referenz-Ortskennung durch die individuelle Ortskennung überschrieben wird, dass
der jeweilige sichere Teilnehmer mittels einer sicheren Nachricht die sichere Steuereinrichtung (50) informiert, dass die im ersten und zweiten Kommunikationszyklus empfangenen individuellen Ortskennungen nicht mit der gespeicherten Referenz-Ortskennung übereinstimmen, und dass unter Ansprechen auf die empfangene sichere Nachricht die sichere Steuereinrichtung (50) eine Bedienperson darüber informiert, dass die in dem ersten und zweiten Kommunikationszyklus übertragenen Ortskennungen übereinstimmen und dass die Ortskennungen jedoch nicht mit der Referenz-Ortskennung im jeweiligen sicheren Teilnehmer übereinstimmen, sowie die Bedienperson auffordert, zu bestätigen, dass der jeweilige sichere Teilnehmer am vorbestimmten Einbauort angeschaltet ist.

4. Verfahren nach Anspruch 2 oder 3,
**dadurch gekennzeichnet, dass**
der jeweilige sichere Teilnehmer (60) und/oder die Steuer- und Datenübertragungsanlage (10) in einen sicheren Zustand überführt werden, wenn die Bedienperson nicht bestätigt, dass der jeweilige sichere Teilnehmer am vorbestimmten Einbauort angeschaltet ist, oder wenn der jeweilige sichere Teilnehmer keine Übereinstimmung der im ersten und zweiten Kommunikationszyklus empfangenen individuellen Ortskennungen feststellt.

5. Verfahren nach einem der Ansprüche 1 bis 4,
**dadurch gekennzeichnet, dass**
die Referenz-Ortskennung im jeweiligen sicheren Teilnehmer erst dann durch die individuelle Ortskennung ersetzt wird, wenn die Bedienperson bestätigt hat, dass der jeweilige sichere Teilnehmer am vorbestimmten Einbauort angeschaltet ist.

6. Verfahren nach einem der Ansprüche 1 bis 5,
**dadurch gekennzeichnet, dass**
die Steuer- und Datenübertragungsanlage (10) ringförmig ausgebildet ist.

7. Verfahren nach einem der Ansprüche 1 bis 6,
**dadurch gekennzeichnet, dass**
die Steuer- und Datenübertragungsanlage (10) einen Feldbus (70) nach dem Interbus-Standard enthält, dass der erste Kommunikationszyklus der ID-Zyklus und der zweite Kommunuikationszyklus der Datenzyklus des Interbus-Protokolls ist und die individuellen Ortskennungen an vorbestimmten Stellen innerhalb eines Summenrahmens von der nicht sicheren Kommunikationssteuereinrichtung (30) zu den jeweiligen sicheren Teilnehmern übertragen werden.

8. Verfahren nach einem der Ansprüche 1 bis 7,
**dadurch gekennzeichnet, dass**
in dem zweiten Konfigurationsdatensatz für jeden sicheren Teilnehmer wenigstens ein teilnehmerspezifischer Parameter, insbesondere die Herstellerkennung und der Gerätetyp enthalten ist, und dass
bei der ersten Inbetriebnahme der Steuer- und Datenübertragungsanlages oder dem Tausch von sicheren Teilnehmern die sicheren Teilnehmer wenigstens einen teilnehmerspezifischen Parameter und die Seriennummer in wenigstens einer sicheren Nachricht zur sicheren Steuereinrichtung (50) übertragen, wobei die Seriennummer des jeweiligen sicheren Teilnehmers dem zweiten Konfigurationsdatensatz zugefügt wird.

9. Verfahren nach einem der Ansprüche 1 bis 8,
**dadurch gekennzeichnet, dass**
die von der sicheren Steuereinrichtung (50) kommenden sicheren Nachrichten, die die individuellen Ortskennungen enthalten, in dem zweiten Kommunikationszyklus von der nicht sicheren Kommunikationssteuereinrichtung (30) zu den jeweiligen sicheren Teilnehmern weitergeleitet werden.

10. Steuer- und Datenübertragungsanlage umfassend:
eine Übertragungseinrichtung (70), an welcher wenigstens eine nicht sichere Kommunikationssteuereinrichtung (30) und wenigstens ein sicherer Teilnehmer (60) angeschaltet sind, wobei die nicht sichere Kommunikationssteuereinrichtung (30) die Position jedes angeschalteten Teilnehmers kennt und eine Speichereinrichtung zum Speichern eines ersten Konfigurationsdatensatzes aufweist, der Angaben über die Position aller angeschalteten Teilnehmer bezüglich der Steuer- und Datenübertragungsanlage (10) und eine individuelle Ortskennung für jeden sicheren Teilnehmer (60) enthält,
eine der nicht sicheren
Kommunikationssteuereinrichtung (30) zugeordnete sichere Steuereinrichtung (50) mit einer Speichereinrichtung zum Speichern eines zweiten Konfigurationsdatensatzes, der eine Liste nur der angeschalteten sicheren Teilnehmer sowie eine individuelle Ortskennung für jeden sicheren Teilnehmer enthält, wobei
die sichere Steuereinrichtung (50) zum Erzeugen und Übertragen einer sicheren Nachricht, die die individuelle Ortskennung eines sicheren Teilnehmers (60) enthält, zur nicht sicheren Kommunikationssteuereinrichtung (30) ausgebildet ist, wobei
die nicht sichere Kommunikationssteuereinrichtung (30) zum Übertragen von individuellen Ortskennungen zu sicheren Teilnehmern (60) während eines ersten Kommunikationszyklus und zum Übertragen der von der sicheren Steuereinrichtung (50) erhaltenen individuellen Ortskennungen zu den sicheren Teilnehmern (60) während eines zweiten Kommunikationszyklus ausgebildet ist, wobei jeder sichere Teilnehmer eine Speichereinrichtung (96) zum Speichern einer Referenz-Ortskennung, eine Einrichtung (92) zum Vergleichen der während des ersten und zweiten Kommunikationszyklus empfangenen individuellen Ortskennungen, eine Einrichtung zum Vergleichen der empfangenen individuellen Ortskennungen mit einer Referenz-Ortskennung, eine Einrichtung zum Übertragen wenigstens einer sicheren Nachricht zur sicheren Steuereinrichtung, wobei die sichere Nachricht eine Information über die Vergleichsergebnisse enthält, aufweist,
wobei die sichere Steuereinrichtung (50) unter Ansprechen auf die von einem sicheren Teilnehmer empfangene sichere Nachricht eine Bedienperson auffordert, zu bestätigen, dass der sichere Teilnehmer am vorbestimmten Einbauort angeschaltet ist.

11. Steuer- und Datenübertragungsanlage nach Anspruch 10,
**gekennzeichnet durch**
eine Einrichtung zum Überführen eines sicheren Teilnehmers und/oder der Steuer- und Datenübertragungsanlage in einen sicheren Zustand, wenn die Bedienperson nicht bestätigt, dass der entsprechende sichere Teilnehmer am vorbestimmten Einbauort angeschaltet ist, oder wenn der jeweilige sichere Teilnehmer feststellt, dass die im ersten und zweiten Kommunikationszyklus übertragenen individuellen Ortskennungen nicht übereinstimmen.

12. Steuer- und Datenübertragungsanlage nach Anspruch 10 oder 11,
**dadurch gekennzeichnet, dass**
die sichere Steuereinrichtung (50) über einen Koppelspeicher (40) mit der nicht sicheren Kommunikationssteuereinrichtung (30) verbunden ist.

13. Steuer- und Datenübertragungsanlage nach einem der Ansprüche 10 bis 12,
**gekennzeichnet durch**
eine programmierbare Steuereinheit (90), die unter Ansprechen darauf, dass die im ersten und zweiten Kommunikationszyklus übertragenen individuellen Ortskennungen nicht mit der in der Speichereinrichtung eines jeweiligen sicheren Teilnehmers gespeicherte Referenz-Ortskennung den jeweiligen sicheren Teilnehmer veranlasst, die Referenz-Ortskennung **durch** die individuelle Ortskennung zu überschreiben.

## Claims

1. Method for checking the installation location of at least one secure subscriber (60) connected to a control and data transmission system (10), wherein an unsecure communications control device (30), to which a secure control device (50) is allocated, is connected to the control and data transmission system, wherein the unsecure communications control device (30) knows the position of each connected subscriber in the control and data transmission system (10), comprising the following method steps:
- in the unsecure communications control device (30) a first configuration data record is stored which contains information relating to the position of all of connected subscribers in relation to the control and data transmission system (10) and an individual location identifier for each secure subscriber (60);
- in the secure control device (50) a second configuration data record is stored which contains a list of only the connected secure subscribers and an individual location identifier for each secure subscriber;
- in a first communications cycle an individual location identifier is transmitted in each case from the unsecure communications control device (30) to each secure subscriber(60);
- the individual location identifiers contained in the second configuration data record are transmitted in secure messages from the secure control device (50) to the unsecure communications control device (30),
- in a second communications cycle the individual location identifiers contained in the received secure messages are transmitted from the unsecure communications control device (30) to the respective secure subscribers (60);
- each secure subscriber compares the individual location identifiers received in the first and second communications cycles;
- if a secure subscriber establishes that the individual location identifiers match, a check is carried out as to whether a reference location identifier is stored in the respective secure subscriber;
- if a reference location identifier is stored in the respective secure subscriber, the individual location identifier is compared to the reference location identifier;
- if the individual location identifier matches the stored reference location identifier of the respective secure subscriber, it is signalled to the secure control device (50) that the respective secure subscriber is connected at the predetermined installation location.

2. Method as claimed in claim 1, **characterised in that** the individual location identifier transmitted in the first and/or second communications cycle is stored as a reference location identifier in the respective secure subscriber, if a reference location identifier has not yet been stored; that the secure control device (50) receives from the respective secure subscriber a secure message which contains information that the location identifiers transmitted in the first and second communications cycles match and that a reference location identifier is not yet stored in the respective secure subscriber; and that - in response to the received secure message, the secure control device (50) informs an operator that the location identifiers transmitted in the first and second communications cycles match and that a reference location identifier is not yet stored in the respective secure subscriber, and requests the operator to confirm that the respective secure subscriber is connected at the predetermined installation location.

3. Method as claimed in claim 1, **characterised in that** if the individual location identifiers received in the first and second communications cycles match, the reference location identifier stored in the respective secure subscriber is compared to the individual location identifier, that if the reference location identifier does not match the individual location identifier, the reference location identifier is overwritten by the individual location identifier, that the respective secure subscriber informs the secure control device (50) by means of a secure message that the individual location identifiers received in the first and second communications cycles do not match the stored reference location identifier, and that in response to the received secure message, the secure control device (50) informs an operator that the location identifiers transmitted in the first and second communications cycles match, and that the location identifiers, however, do not match the reference location identifier in the respective secure subscriber, and requests the operator to confirm that the respective secure subscriber is connected at the predetermined installation location.

4. Method as claimed in claim 2 or 3, **characterised in that** the respective secure subscriber (60) and/or the control and data transmission system (10) are transferred to a secure state if the operator does not confirm that the respective secure subscriber is connected at the predetermined installation location or if the respective secure subscriber establishes that the individual location identifiers received in the first and second communications cycles do not match.

5. Method as claimed in any one of claims 1 to 4, **characterised in that** the reference location identifier in the respective secure subscriber is replaced by the individual location identifier only when the operator has confirmed that the respective secure subscriber is connected at the predetermined installation location.

6. Method as claimed in any one of claims 1 to 5, **characterised in that** the control and data transmission system (10) has a ring-shaped design.

7. Method as claimed in any one of claims 1 to 6, **characterised in that** the control and data transmission system (10) contains a field bus (70) in accordance with the Interbus standard, that the first communications cycle is the ID cycle and the second communications cycle is the data cycle of the Interbus protocol, and the individual location identifiers are transmitted at predetermined positions within a summation frame from the unsecure communications control device (30) to the respective secure subscribers,

8. Method as claimed in any one of claims 1 to 7, **characterised in that** at least one subscriber-specific parameter, in particular the manufacturer identifier and the device type, is included for each secure subscriber in the second configuration data record, and that during the first start-up of the control and data transmission system or exchange of secure subscribers, the secure subscribers transmit at least one subscriber-specific parameter and the serial number in at least one secure message to the secure control device (50), wherein the serial number of the respective secure subscriber is added to the second configuration data record.

9. Method as claimed in any one of claims 1 to 8, **characterised in that** the secure messages which come from the secure control device (50) and which contain the individual location identifiers are relayed in the second communications cycle from the unsecure communications control device (30) to the respective secure subscribers.

10. Control and data transmission system, comprising:
a transmission device (70), to which at least one unsecure communications control device (30) and at least one secure subscriber (60) are connected, wherein the unsecure communications control device (30) knows the position of each connected subscriber and has a memory device for storing a first configuration data record which contains information relating to the position of all connected subscribers in relation to the control and data transmission system (10), and an individual location identifier for each secure subscriber (60);
a secure control device (50) allocated to the unsecure communications control device (30) with a memory device for storing a second configuration data record which contains a list of only the connected secure subscribers and also an individual location identifier for each secure subscriber, wherein
the secure control device (50) is designed for generating and transmitting a secure message, which contains the individual location identifier of a secure subscriber (60), to the unsecure communications control device (30), wherein
the unsecure communications control device (30) is designed for transmitting individual location identifiers to secure subscribers (60) during a first communications cycle and for transmitting the individual location identifiers, which are received from the secure control device (50), to the secure subscribers (60) during a second communications cycle, wherein
each secure subscriber comprises a memory device (96) for storing a reference location identifier, a device (92) for comparing the individual location identifiers received during the first and second communications cycles, a device for comparing the received individual location identifiers to a reference location identifier, a device for transmitting at least one secure message to the secure control device, wherein the secure message contains information relating to the comparison results,
wherein in response to the secure message received from a secure subscriber, the secure control device (50) requests an operator to confirm that the secure subscriber is connected at the predetermined installation location.

11. Control and data transmission system as claimed in claim 10, **characterised by** a device for transferring a secure subscriber and/or the control and data transmission system to a secure state, if the operator does not confirm that the respective secure subscriber is connected at the predetermined installation location or if the respective secure subscriber establishes that the individual location identifiers transmitted in the first and second communications cycles do not match.

12. Control and data transmission system as claimed in claim 10 or 11, **characterised in that**
the secure control device (50) is connected to the unsecure communications control device (30) via a coupling memory (40).

13. Control and data transmission system as claimed in any one of claims 10 to 12, **characterised by**
a programmable control unit (90) which, in response to the fact that the individual location identifiers transmitted in the first and second communications cycles do not [lacuna] the reference location identifier stored in the memory device of a respective secure subscriber, causes the respective secure subscriber to overwrite the reference location identifier with the individual location identifier.

## Revendications

1. Procédé pour contrôler le lieu d'emplacement d'au moins un abonné (60) sûr, rattaché à une installation de commande et de transmission de données (10), un dispositif de commande de communication (30) non sûr étant rattaché à l'installation de commande et de transmission de données, dispositif auquel est attribué un dispositif de commande (50) sûrs, le dispositif de commande de communication non sûr (30) connaissant la position de chaque abonné rattaché dans l'installation de commande et de transmission de données (10), présentant les étapes de procédé suivantes ;
- dans le dispositif de commande de communication (30) non sûr, on dépose un premier ensemble de données de configuration qui contient des indications sur la position de tous les abonnés rattachés concernant l'installation de commande et de transmission de données (10) et une identification locale individuelle pour chaque abonné (60) sûr ;
- dans le dispositif de commande (50) sûr est déposé un second ensemble de données de configuration, qui contient une liste uniquement des abonnés sûrs rattachés et une identification locale individuelle pour chaque abonné sûr ;
- dans un premier cycle de communication, une identification locale individuelle est transmise à chaque fois par le dispositif de commande de communication (30) non sûr à chaque abonné (60) sûr ;
- les identifications locales individuelles incluses dans le second ensemble de données de configuration sont transmises dans des messages sûrs par le dispositif de commande (50) sûr au dispositif de commande de communication (30) non sûr,
- dans un second cycle de communication, les identifications locales individuelles, contenues dans les messages sûrs reçus, sont transmises par le dispositif de commande de communication (30) non sûr aux abonnés (60) sûrs respectifs ;
- chaque abonné sûr compare les identifications locales individuelles reçues dans le premier et le second cycle de communication ;
- lorsqu'un abonné sûr constate une concordance des identifications locales individuelles, on vérifie si une identification locale de référence est déposée dans l'abonné sûr respectif ;
- si une identification locale de référence est déposée dans l'abonné sûr respectif, l'identification locale individuelle est comparée avec l'identification locale de référence ;
- lorsque l'identification locale individuelle coïncide avec l'identification locale de référence mémorisée de l'abonné sûr concerné, on signale au dispositif de commande (50) sûr que l'abonné sûr respectif est rattaché sur le lieu de montage prédéfini.

2. Procédé selon la revendication 1,
**caractérisé en ce que**
l'identification locale individuelle, transmise dans le premier et/ou le second cycle de communication, est stockée comme identification locale de référence dans l'abonné sûr respectif, lorsqu'aucune identification locale de référence n'a été déposée jusqu'à présent ; **en ce que** le dispositif de commande (50) sûr reçoit de l'abonné sûr respectif un message sûr qui contient des informations sur le fait que les identifications locales transmises dans le premier et le second cycle de communication concordent et **en ce qu'**aucune identification locale de référence n'est encore stockée dans l'abonné sûr respectif ; et **en ce que**
- le dispositif de commande (50) sûr informe un opérateur, en réaction au message sûr reçu, que les identifications locales transmises dans le premier et le second cycle de communication concordent et **en ce qu'**aucune identification locale de référence n'est encore stockée dans l'abonné sûr respectif, et invite l'opérateur à confirmer que l'abonné sûr respectif est rattaché sur le lieu de montage prédéfini.

3. Procédé selon la revendication 1,
**caractérisé en ce que**,
dans le cas d'une concordance des identifications locales individuelles reçues dans le premier et le second cycle de communication, l'identification locale de référence stockée dans l'abonné sûr respectif est comparée avec l'identification locale individuelle, de telle sorte que, si l'identification locale de référence ne coïncide pas avec l'identification locale individuelle, l'identification locale de référence est écrasée par l'identification locale individuelle, **en ce que**
l'abonné sûr respectif informe le dispositif de commande (50) sûr au moyen d'un message sûr que les identifications locales individuelles, reçues dans le premier et le second cycle de communication, ne concordent pas avec l'identification locale de référence stockée, et que, en réaction au message sûr reçu, le dispositif de commande (50) sûr informe un opérateur que les identifications locales transmises dans le premier et le second cycle de communication concordent et que les identifications locales ne concordent cependant pas avec l'identification locale de référence dans l'abonné sûr respectif, et invite l'opérateur à confirmer que l'abonné sûr respectif est rattaché sur le lieu de montage prédéfini.

4. Procédé selon la revendication 2 ou 3,
**caractérisé en ce que**
l'abonné (60) sûr respectif et/ou l'installation de commande et de transmission de données (10) sont transférés dans un état sûr lorsque l'opérateur ne confirme pas que l'abonné sûr respectif est rattaché sur le lieu de montage prédéfini, ou si l'abonné sûr respectif ne constate pas de concordance des identifications locales individuelles reçues dans le premier et le second cycle de communication.

5. Procédé selon l'une quelconque des revendications 1 à 4,
**caractérisé en ce que**
l'identification locale de référence n'est remplacée par l'identification locale individuelle dans l'abonné sûr respectif que dans le cas où l'opérateur a confirmé que l'abonné sûr respectif est rattaché sur le lieu de montage prédéfini.

6. Procédé selon l'une quelconque des revendications 1 à 5,
**caractérisé en ce que**
l'installation de commande et de transmission de données (10) est conçue avec une forme annulaire.

7. Procédé selon l'une quelconque des revendications 1 à 6,
**caractérisé en ce que**
l'installation de commande et de transmission de données (10) contient un bus de terrain (70) selon le standard Interbus, **en ce que** le premier cycle de communication est le cycle ID et le second cycle de communication le cycle de données du protocole Interbus et les identifications locales individuelles sont transmises en des endroits prédéfinis à l'intérieur d'un cadre de cumul du dispositif de commande de communication (30) non sûr aux abonnés sûrs respectifs.

8. Procédé selon l'une quelconque des revendications 1 à 7,
**caractérisé en ce que**
au moins un paramètre spécifique à l'abonné, en particulier l'identification du fabricant et le type d'appareil, est inclus dans le second ensemble de données de configuration pour chaque abonné sûr, et **en ce que**
lors de la première mise en service de l'installation de commande et de transmission de données ou lors du remplacement d'abonnés sûrs, les abonnés sûrs transmettent au moins un paramètre spécifique à l'abonné et le numéro de série dans au moins un message sûr au dispositif de commande (50) sûr, le numéro de série de l'abonné sûr respectif étant ajouté au second ensemble de données de configuration.

9. Procédé selon l'une quelconque des revendications 1 à 8,
**caractérisé en ce que**
les messages sûrs venant du dispositif de commande (50) sûr, qui contiennent les identifications locales individuelles, sont transmis dans le second cycle de communication par le dispositif de commande de communication (30) non sûr aux abonnés sûrs respectifs.

10. Installation de commande et de transmission de données, comprenant :
un dispositif de transmission (70), sur lequel au moins un dispositif de commande de communication (30) non sûr et au moins un abonné (60) sûr sont rattachés, le dispositif de commande de communication (30) non sûr connaissant la position de chaque abonné rattaché et présentant un dispositif de stockage pour le stockage d'un premier ensemble de données de configuration, lequel contient des indications sur la position de tous les abonnés rattachés en ce qui concerne l'installation de commande et de transmission de données (10) et une identification locale individuelle pour chaque abonné (60) sûr,
un dispositif de commande (50) sûr, attribué au dispositif de commande de communication (30) non sûr, avec un dispositif de stockage pour le stockage d'un second ensemble de données de configuration, lequel contient une liste uniquement des abonnés sûrs rattachés et une identification locale individuelle pour chaque abonné sûr,
le dispositif de commande (50) sûr étant conçu pour générer et transmettre un message sûr, qui contient l'identification locale individuelle d'un abonné (60) sûr, au dispositif de commande de communication (30) non sûr,
le dispositif de commande de communication (30) non sûr étant conçu pour transmettre des indentifications locales individuelles à des abonnés (60) sûrs pendant un premier cycle de communication et pour transmettre les indentifications locales individuelles reçues du dispositif de commande (50) sûr aux abonnés (60) sûrs pendant un second cycle de communication, chaque abonné sûr présentant un dispositif de stockage (96) pour le stockage d'une identification locale de référence, un dispositif (92) pour la comparaison des identifications locales individuelles reçues pendant le premier et le second cycle de communication, un dispositif pour la comparaison des identifications locales individuelles reçues avec une identification locale de référence, un dispositif pour la transmission d'au moins un message sûr au dispositif de commande sûr, le message sûr contenant une information sur les résultats de la comparaison, le dispositif de commande (50) sûr invitant un opérateur, en réaction au message sûr reçu d'un abonné sûr, à confirmer que l'abonné sûr est rattaché au lieu de montage prédéfini.

11. Installation de commande et de transmission de données selon la revendication 10,
**caractérisée par**
un dispositif pour le transfert d'un abonné sûr et/ou de l'installation de commande et de transmission de données dans un état sûr, lorsque l'opérateur ne confirme pas que l'abonné sûr correspondant est rattaché sur le lieu de montage prédéfini ou lorsque l'abonné sûr respectif constate que les identifications locales individuelles transmises dans le premier et le second cycle de communication, ne concordent pas.

12. Installation de commande et de transmission de données selon la revendication 10 ou 11,
**caractérisée en ce que**
le dispositif de commande (50) sûr est relié par une mémoire de couplage (40) au dispositif de commande de communication (30) non sûr.

13. Installation de commande et de transmission de données selon l'une quelconque des revendications 10 à 12,
**caractérisée par**
une unité de commande (90) programmable, qui, en réaction au fait que les identifications locales individuelles transmises dans le premier et le second cycle de communication ne concordent pas avec l'identification locale de référence stockée dans le dispositif de stockage d'un abonné sûr respectif, ordonne à l'abonné sûr respectif d'écraser l'identification locale de référence par l'identification locale individuelle.
